# EUROPEAN PATENT SPECIFICATION

(11) **EP 4 630 190 B1**
(45) Date of publication and mention of the grant of the patent: **30.09.2026**
(21) Application number: 23821366.4
(22) Date of filing: 06.12.2023
(51) Int. Cl.: B22F 10/36, B22F 10/366, B33Y 70/00, C22C 33/02

(54) **METAL POWDER FOR ADDITIVE MANUFACTURING**
METALLPULVER ZUR GENERATIVEN FERTIGUNG
POUDRE MÉTALLIQUE POUR FABRICATION ADDITIVE

(30) Priority: 06.12.2022 WO PCT/IB2022/061807
(43) Date of publication of application: 15.10.2025
(73) Proprietor: ArcelorMittal, 1160 Luxembourg (LU)
(72) Inventor: SANCHEZ PONCELA, Manuel, 33490 Avilés Asturias (ES)
(74) Representative: Lavoix
(86) International application number: PCT/IB2023/062284
(87) International publication number: WO 2024/121762

(56) References cited:
- US-A1- 2021 087 663
- US-A1- 2021 222 275
- LIU F ET AL: "Ductile Fe-Mo-P-C-B-Si bulk metallic glasses with high saturation magnetization", JOURNAL OF ALLOYS AND COMPOUNDS, ELSEVIER SEQUOIA, LAUSANNE, CH, vol. 483, no. 1-2, 26 August 2009 (2009-08-26), pages 613 - 615, XP026545625, ISSN: 0925-8388, [retrieved on 20090826], DOI: 10.1016/J.JALLCOM.2008.07.164
- SHEN BAOLONG ET AL: "Excellent soft-ferromagnetic bulk glassy alloys with high saturation magnetization", APPLIED PHYSICS LETTERS, AMERICAN INSTITUTE OF PHYSICS, 2 HUNTINGTON QUADRANGLE, MELVILLE, NY 11747, vol. 88, no. 13, 28 March 2006 (2006-03-28), pages 131907 - 131907, XP012080800, ISSN: 0003-6951, DOI: 10.1063/1.2189910

## Description

The present invention relates to a metal powder for the manufacturing of steel parts and in particular for their additive manufacturing. The present invention also relates to the method for manufacturing the metal powder.

Fe-based bulk metallic glasses (BMGs) have been attracting much attention due to their excellent soft-magnetic property, high corrosion resistance, good mechanical properties, high wear resistance, etc. They have been utilized notably as high-efficient magnetic middle and high-frequency transformers in the electric and electronic industries. However, till now, most Fe-based BMGs with good soft magnetic properties can only be produced in very complex process conditions. The liquid compositions have to be casted with a high cooling rate between chilled rolls to obtain an amorphous material generally in the form of a thin ribbon. Aside from the complex process, this production in thin ribbons drastically limits their use.

Fe-based BMGs are known notably from US20210222275, from US20210087663, from the paper "Ductile Fe-Mo-P-C-B-Si bulk metallic glasses with high saturation magnetization", Liu T et Al, Journal of alloys and compounds, vol.483, 26 August 2009, p.613-615 and from the paper "Excellent soft-ferromagnetic bulk glassy alloys with high saturation magnetization", Shen Baolong et Al, Applied Physics Letters, vol.88, 28 March 2006, p.131907-131907.

The aim of the present invention is therefore to remedy the drawbacks of the prior art by providing Fe-based BMGs which can be easily produced and easily processed to obtain final parts.

For this purpose, a first object of the present invention consists of a metal powder according to claim 1.

The metal powder according to the invention may also have the optional features listed below, considered individually or in combination:
- the Mo content is from 13 to 16.5 wt%,
- the P content is from 6 to 7 wt%,
- the B content is from 0.7 to 2 wt%,
- the Si content is from 0.3 to 0.6 wt%,
- the microstructure of the metal powder comprises at least 99 wt% of an amorphous phase,
- the average particle size ranks from 1 to 150 µm,
- the average particle size ranks from 1 to 20 µm,
- the average particle size ranks from 20 to 63 µm,
- the average particle size ranks from 60 to 150 µm.

A second object of the invention consists of a process for manufacturing a metal powder for additive manufacturing according to claim 11.

A third object of the invention consists of a process for manufacturing a printed part by additive manufacturing according to claim 12.

The process for manufacturing the printed part may also have the optional features listed below, considered individually or in combination:
- It further comprises a first step of forming a powder layer with a thickness below 100 µm and a second step where a focused laser beam forms a shaped layer by melting at least part of the powder layer in an atmosphere substantially composed of an inert gas,
- the laser power is limited to maximum 120 W,
- the scan speed is from 400 to 750 mm/s,
- the Linear Energy Density is from 80 to 200 J/m,
- the hatch spacing is from 40 to 100 µm,
- The Volumetric Energy Density is from 80 to 200 J/mm³.

A fourth object of the invention consists of a printed part according to claim 15.

The invention will be better understood by reading the following description, which is provided purely for purposes of explanation and is in no way intended to be restrictive.

Molybdenum is present in the composition according to the invention at a content of 12 to 18 wt%. Molybdenum is an element that promotes the confusion effect to promote the glass forming ability of the steel. Below 12 wt%, the glass forming ability is not sufficient. Above 18 wt%, Molybdenum might segregate during solidification, which would promote the nucleation of Mo-rich phases that are detrimental for the glass forming ability.

Preferably the Mo content is comprised between 13 and 16.5 wt% to further improve the glass forming ability.

The phosphorus content is comprised between 3 and 7 wt%. Phosphorus is another element that promotes the glass forming ability of the steel. Below 3 wt%, the glass forming ability is not sufficient. Above 7 wt%, Phosphorus can form brittle phases and contribute to hot cracking, which is detrimental for the material integrity. It also increases the degree of crystallinity of the material.

Preferably the P content is comprised between 6 and 7 wt% to further enhance the glass forming ability.

The carbon content is comprised between 0.5 and 3 wt%. Carbon is another element that promotes the confusion effect to promote the glass forming ability of the steel. It has a high negative enthalpy of mixing with Fe and its atomic radius is 89 pm smaller than the Fe atomic radius. However, high carbon content can lead to the formation of carbides, in particular cementite, M6C-carbides and KSI-carbides, where nucleation will start. This is detrimental to the microstructure.

Preferably the C content is comprised between 1.4 and 2.2 wt% to further improve the glass forming ability of the steel and retard crystallization.

The boron content is comprised between 0.5 and 5 wt%. Boron highly increases the hardness and wear resistance of a material. It is also used for grain refinement and for increasing the Glass Forming Ability (GFA) of the steel, its atomic radius being 69 pm smaller than the Fe atomic radius. For these reasons, the B content is of at least 0.5 wt%. However, the B content is limited to 5 wt% because, beyond this value, the formation of boride is promoted which induces brittleness in the material.

Preferably the B content is comprised between 0.7 and 2 wt% in order to further avoid brittleness.

Silicon is present in the composition according to the invention at a content of up to 1 wt%. Si decreases the liquidus temperature, thus minimizing the risk of crystallization above the glass transition temperature. It also promotes the confusion effect as it tends to form complex phases at equilibrium. However, above 1 wt%, Si tends to increase the liquidus temperature (which increases the risk of crystallization) and tends to form Si-rich carbides, such as (Fe)2(Mo)2(FeMoSi)2(C)1, where nucleation will start. Preferably the Si content is comprised between 0.3 and 0.6 wt%.

The balance is made of iron and unavoidable impurities resulting from the elaboration. Nickel, chromium, manganese, titanium, rare earths, sulfur, nitrogen, oxygen, aluminum, vanadium, copper are the main impurities. They are not deliberately added. They might be present in the ferroalloys and/or pure elements used as raw materials. Nitrogen can also be introduced during atomization. Their content is preferably controlled to avoid changing detrimentally the microstructure and/or to avoid crystallization. Therefore, the content in Ni should be limited to 2wt%, Cr should be limited to 1wt%, Mn should be limited to 1wt%, Ti should be limited to 0.5wt%, rare earths should be limited to 1wt% and the content in the other impurities should be limited to 0.03wt%.

The metal powder has a microstructure comprising at least 95 wt% of an amorphous phase, the remainder being made of crystalline phase(s). The crystalline phase(s) can be at least one of austenite, ferrite, cementite, M2B-type boride such as (FeMoMn)2(B)1, M3B2-type boride such as (FeMo)0.4(Fe)0.2(B)0.4, M2P-type phosphide such as (FeMoMn)2(PSi)1, M3P-type phosphide such as (FeMO)3(P)1, M6C-type carbide such as (Fe)2(Mo)2(FeMoSi)2(C)1 and KSI-type carbide such as (FeMo)3(C)1. Preferably the microstructure comprises at least 99 wt% of an amorphous phase, the remainder being made of crystalline phase(s). More preferably, the microstructure is fully amorphous. The weight fraction of amorphous phase can be calculated by Rietveld refinement of powder X-Ray Diffraction (XRD) measurements.

The sphericity or form factor of the powder is preferably high. The form factor is defined in ISO 9276-6:2008 as 4πA/P², where A is the measured area covered by a particle projection and P is the measured perimeter/circumference of a particle projection. A value of 1.0 indicates a perfect sphere. The mean form factor of the powder is preferably at least 0.70 and more preferably at least 0.80. Thanks to this high form factor, the metal powder is highly flowable. Consequently, the additive manufacturing is made further easier and the printed parts are denser and harder. The mean form factor can be measured by Dynamic Image Analysis according to ISO 13322-2:2021. It can be notably measured with a Digital Imaging Particle Size and Shape Analyzer, such as Camsizer^{®}.

Preferably, not more than 7 % of the particles have a form factor inferior to 0.65.

In addition to the form factor, the aspect ratio can be used in the classifying of the powder particles. The aspect ratio is defined in ISO 9276-6:2008 as the ratio between the Feret's minimum length to the Feret's maximum length. It can be measured by Dynamic Image Analysis according to ISO 13322-2:2021. It can be notably measured with a Digital Imaging Particle Size and Shape Analyzer, such as Camsizer^{®}. The mean aspect ratio should be preferably above 0.7, more preferably above 0.75.

The particle size distribution, measured by laser diffraction according to ISO13320:2020, preferably fulfils the following requirements (in µm): $5 \leq D 10 \leq 25$ $35 \leq D 50 \leq 85$ $100 \leq D 90 \leq 280$

The powder can be obtained by first mixing and melting pure elements and/or ferroalloys as raw materials. It can also be obtained by using a pre-alloyed ingot of the required composition.

Pure elements are usually preferred to avoid having too much impurities coming from the ferroalloys, as these impurities might ease the crystallization. Nevertheless, in the case of the present invention, it has been observed that the impurities coming from the ferroalloys were not detrimental to the achievement of the amorphous phase.

Ferroalloys refer to various alloys of iron with a high proportion of one or more other elements such as molybdenum, phosphorus, boron, silicon.... The main alloys are FeMo (usually comprising 60 to 75 wt%Mo), FeP (usually comprising 15 to 30 wt%P), FeB (usually comprising 17.5 to 20 wt%B), FeSi (usually comprising 15 to 90 wt%Si), FeNi (usually comprising 70 to 95 wt%Ni), FeCr (usually comprising 50 to 70 wt%Cr), FeMn (usually comprising 70 to 80 wt%Mn), FeTi (usually comprising 45 to 75 wt%Ti), FeAl (usually comprising 40 to 60 wt%AI), FeV (usually comprising 35 to 85 wt%V).

Raw materials can be alternatively added as pure elements (usually with a purity over 99 wt.%). Pure elements can notably be carbon and pure metals such as iron, molybdenum, boron, silicon, nickel, chromium, manganese, titanium, rare earths, aluminum, vanadium, copper.

The person skilled in the art knows how to mix different ferroalloys and pure elements to reach a targeted composition.

Preferably the mix comprises FeMo ferroalloy, FeP ferroalloy, FeB ferroalloy, FeSi ferroalloy, graphite and Fe.

Once the composition has been obtained by the mixing of the pure elements and/or ferroalloys in appropriate proportions, the composition is heated at a temperature at least 100°C above its liquidus temperature and maintain at this temperature to melt all the raw materials and homogenize the melt. Thanks to this overheating, the decrease in viscosity of the melted composition helps obtaining a powder with a high sphericity without satellites and with a proper particle size distribution. That said, as the surface tension increases with temperature, it is preferred not to heat the composition at a temperature more than 530°C above its liquidus temperature.

Preferably, the composition is heated at a temperature at least 200°C above its liquidus temperature so as to promote the formation of highly spherical particles. More preferably, the composition is heated at a temperature 220 to 280°C above its liquidus temperature.

In one variant of the invention, the composition is heated between 1300 and 1600°C which represents a good compromise between viscosity decrease and surface tension increase.

The molten composition is then atomized into fine metal droplets by forcing a molten metal stream through an orifice, the nozzle, at moderate pressures and by impinging it with jets of gas (gas atomization) or of water (water atomization). In the case of the gas atomization, the gas is introduced into the metal stream just before it leaves the nozzle, serving to create turbulence as the entrained gas expands (due to heating) and exits into a large collection volume, the atomizing tower. The latter is filled with gas to promote further turbulence of the molten metal jet. The metal droplets cool down during their fall in the atomizing tower. Gas atomization is preferred because it favors the production of powder particles having a high degree of roundness and a low amount of satellites.

The atomization gas is preferably argon or nitrogen or a mixture thereof. They both increase the melt viscosity slower than other gases, e.g. helium, which promotes the formation of smaller particle sizes. They also control the purity of the chemistry, avoiding undesired impurities, and play a role in the good morphology of the powder. Finer particles can usually be obtained with argon than with nitrogen since the molar weight of nitrogen is 14.01 g/mole compared with 39.95 g/mole for argon. On the other hand, the specific heat capacity of nitrogen is 1.04 J/(g K) compared with 0.52 for argon. So, nitrogen increases the cooling rate of the particles. Argon might be preferred over nitrogen to avoid the contamination of the composition by nitrogen.

The gas pressure directly impacts the particle size distribution. Moreover, the higher the pressure, the higher the cooling rate. Consequently, a high pressure prevents the particles from crystallizing. Accordingly, the gas pressure is set between 10 and 30 bar to optimize the particle size distribution and favor the formation of the amorphous phase. Preferably, the gas pressure is set between 14 and 20 bar to promote the formation of particles whose size is most compatible with the additive manufacturing techniques.

The nozzle diameter has an impact on the molten metal flow rate and, thus, on the particle size distribution and on the cooling rate. The maximum nozzle diameter is limited to 4mm to limit the increase in mean particle size and the decrease in cooling rate. The nozzle diameter is preferably between 2 and 3 mm to more accurately control the particle size distribution.

The gas to metal ratio, defined as the ratio between the gas flow rate (in Kg/h) and the metal flow rate (in Kg/h), is preferably kept between 1.5 and 7, more preferably between 3 and 4. It helps adjusting the cooling rate.

According to one variant of the invention, in the event of humidity uptake, the metal powder obtained by atomization is dried to further improve its flowability. Drying is preferably done at 100°C in a vacuum chamber.

The metal powder obtained by atomization can be either used as such or can be sieved to keep the particles whose size better fits the additive manufacturing technique to be used afterwards. For example, in case of additive manufacturing by Powder Bed Fusion, the range 20-63 µm (called fraction F2) is preferred and the range 20-40 µm is even better. In the case of additive manufacturing by Laser Metal Deposition or Direct Metal Deposition, the range 60-150 µm (called F3) is preferred and the range 40-125 µm is even better. Fraction F1 covering particles sizes below 20 µm can be used for example in binder jetting.

The parts made of the metal powder according to the invention can be obtained by additive manufacturing techniques such as Laser Powder Bed Fusion (LPBF), Direct metal laser sintering (DMLS), Electron beam melting (EBM), Selective heat sintering (SHS), Selective laser sintering (SLS), Laser Metal Deposition (LMD), Direct Metal Deposition (DMD), Direct Metal Laser Melting (DMLM), Direct Metal Printing (DMP), Laser Cladding (LC), Binder Jetting (BJ). Coatings made of the metal powder according to the invention can also be obtained by manufacturing techniques such as Cold Spray, Thermal Spray, High Velocity Oxygen Fuel.

In particular, the invention can make use of LPBF process which is a layer-upon-layer additive manufacturing technique. Thin layers of metal powder are evenly distributed using a coating mechanism onto a substrate platform, usually metal, that is fastened to an indexing table that moves in the vertical axis. This takes place inside a chamber containing a tightly controlled atmosphere. Once each layer has been distributed, each 2D slice of the part geometry is fused by selectively melting the powder. This is accomplished with a high-power laser beam, usually an ytterbium fiber laser. The laser energy is intense enough to permit full melting (welding) of the particles in the form of a track or strip. Basically, once a track is done, the process is repeated with the next track, which is separated from the first one by the hatch spacing. The process is repeated layer after layer until the part is complete. The overhanging geometry is supported by nonmelted powder from previous layers. The main process parameters used in LPBF are usually the layer thickness, the hatch spacing, the scan speed and the laser power. After completing the process, the left-over powder is screened to be reused.

The process for producing an additively manufactured part by LPBF comprises a first step of forming a powder layer with the powder according to the invention. Preferably the powder layer is less than 100 µm. Above 100 µm, the laser might not melt the powder in all the layer thickness, which might lead to porosity in the part. Preferably, the layer thickness is kept from 10 to 60 µm to optimize the melting of the powder.

In a second step, a focused laser beam forms a shaped layer by melting at least part of the powder layer in the process conditions detailed below.

In the case of LPBF, each layer of the printed part is at least partially melted in an atmosphere substantially composed of an inert gas.

The laser power is preferably limited to maximum 120 W. Preferably, the laser power is set above 50W to ease the melting in all the layer thickness. In a preferred embodiment, the laser power is from 55 to 115 W.

The scan speed is preferably from 400 to 750 *mm*/*s* and more preferably from 450 to 700 mm/s. Below 400 mm/s, the excess energy provided by the laser might lead key-hole porosity and/or to spatters which, if not properly drag outside of the powder bed, deposit on the powder layer which create voids in the printed part. Above 750 mm/s, the energy provided by the laser to the powder might not be enough to melt the powder in all the layer thickness.

The Linear Energy Density (LED) is preferably from 80 to 200 J/m. LED is defined as the ratio between the laser power and the scan speed expressed in m/s. Below 80 J/m, LED might not be enough to properly print parts (due to keyholing). Above 200 J/m, the excess energy provided by the laser might lead to spatters which, if not properly drag outside of the powder bed, deposit on the powder layer. Such deposits create voids in the printed part.

The hatch spacing is preferably from 40 to 100 µm. Below 40 µm, each point of the printed part might be remelted multiple times which might lead to overheating. Above 100 µm, non-melted powder might be trapped between two tracks. More preferably, the hatch spacing is from 50 to 80 µm.

The Volumetric Energy Density (VED) is preferably from 80 to 200 J/mm³. VED is defined as P/(v·h·lₜ), where P is the laser power, v is the scan speed, h is the hatch spacing and It is the powder layer thickness. More preferably the VED is from 90 to 160 J/mm³.

The laser spot size is preferably comprised between 30 and 150 µm.

The parts made of the metal powder according to the invention by additive manufacturing techniques have specific characteristics and properties.

Their microstructure comprises at least 75 wt% of an amorphous phase, the remainder being made of crystalline phase(s). The crystalline phase(s) can be at least one of austenite, ferrite, cementite, M2B-type boride such as (FeMoMn)2(B)1, M3B2-type boride such as (FeMo)0.4(Fe)0.2(B)0.4, M2P-type phosphide such as (FeMoMn)2(PSi)1, M3P-type phosphide such as (FeMO)3(P)1, M6C-type carbide such as (Fe)2(Mo)2(FeMoSi)2(C)1 and KSI-type carbide such as (FeMo)3(C)1. The microstructure comprises preferably at least 80 wt%, more preferably at least 95 wt%, of an amorphous phase, the remainder being made of crystalline phase(s).

The parts are very hard, with a Vickers Hardness Hv1 above 780.

### Examples

The following examples and tests presented hereunder are non-restricting in nature and must be considered for purposes of illustration only. They will illustrate the advantageous features of the present invention, the significance of the parameters chosen by inventors after extensive experiments and further establish the properties that can be achieved by the metal powder according to the invention.

Powder 1:
A metal composition comprising 16.11 wt% Mo, 6.23 wt% P, 1.464 wt% C, 0.8 wt% B, 0.47 wt% Si, < 0.25 wt% Mn, < 0.3 wt% Ti, < 0.01 wt% Al, < 0.001 wt% Cr, < 0.2 wt% V, 0.019 wt% O, 0.0076 wt% S, 5.9ppm N, the remainder being iron, was first obtained by mixing and melting the following ferroalloys and pure elements in the following proportions:
- 23.83 wt% of FeP comprising 73.61 wt% Fe, 25.93 wt% P, 1.55wt% Si, 1.5 wt% Ti, <0.7 wt% Mn, <0.4 wt% Cr, <0.7 wt% V,
- 6.04 wt% of FeB comprising 82.33 wt% Fe, 18.16 wt% B, 0.13 wt% Al, 0.007 wt% S, 0.31 wt% C, 0.03 wt% P and 0.54 wt% Si,
- 14.49 wt% of Mo,
- 2.37 wt% of graphite,
- 53.26 wt% of iron ingots comprising 99.79 wt% Fe, 0.005 wt% C, 0.001 wt% Al, 0.15 wt% Mn, 0.002 wt% Si, 0.002 wt% P, 0.002 wt% S.

This metal composition was heated up to 1315°C, i.e. 250°C above the liquidus temperature, and was then gas atomized with argon in the following process conditions:
- Gas pressure: 16 bar
- Nozzle diameter: 2.5mm
- Gas to metal ratio: 3.21

The obtained metal powder was then dried at 100°C under vacuum for 0.5 to 1 day.

The powder was then sieved and classified into F1 to F3 fractions. Its flowability, sphericity and roundness were evaluated and found satisfying for additive manufacturing use.

The metal powder had the following characteristics:
XRD and Electron Beam Backscatter Diffraction (EBDS) analyses did not show any evidence of crystalline phases. At least 99 wt% of the microstructure was thus amorphous.

The mean form factor measured by Dynamic Image Analysis according to ISO 13322-2:2021, using a Camsizer^{®} equipment, was 0.87 for fraction F2.

The particle size distribution, measured by laser diffraction according to ISO13320:2020, presented the following characteristics: D10 = 15.64 µm, D50 = 52.06 µm and D90 = 137.15 µm.

Thanks to these characteristics, the obtained metal powder exhibited the following magnetic properties, measured by Vibrating-Sample Magnetometer (VSM): the coercivity Hc, measured at room temperature, was 8x10⁻⁵ T. The Magnetic Saturation Ms, measured at room temperature, was 70.6 Am²/Kg. The Remanence Mr, measured at room temperature, was 0.043 Am²/Kg.

Powder 2:
A metal composition comprising 14.2 wt% Mo, 6.53 wt% P, 1.94 wt% C, 1.02 wt% B, 0.43 wt% Si, 0.77 wt% Mn, < 0.01 wt% Al, 0.11 wt% Cr, 0.09 wt% Ni, < 0.1 wt% Cu, 0.019 wt% O, 0.012 wt% S, < 20 ppm N, the remainder being iron, was first obtained by mixing and melting the following ferroalloys and pure elements in the following proportions:
- 21.41 wt% of FeMo comprising 32.3 wt% Fe, 0.09 wt% C, 0.45 wt% Cu, 66.86 wt% Mo, 0.04 wt% P, 0.04 wt% S, 0.29 wt% Si,
- 24.37 wt% of FeP comprising 73.61 wt% Fe, 25.93 wt% P, 1.55wt% Si, 1.5 wt% Ti, <0.7 wt% Mn, <0.4 wt% Cr, <0.7 wt% V,
- 6.17 wt% of FeB comprising 82.33 wt% Fe, 18.16 wt% B, 0.13 wt% Al, 0.007 wt% S, 0.31 wt% C, 0.03 wt% P and 0.54 wt% Si,
- 0.1 wt% of FeSi comprising 23.51 wt% Fe, 0.82 wt% Al, 0.09 wt% C, 0.018 wt% P, 0.002 wt% S, 75.56 wt% Si,
- 2.38 wt% of graphite,
- 45.57 wt% of iron ingots comprising 99.79 wt% Fe, 0.005 wt% C, 0.001 wt% Al, 0.15 wt% Mn, 0.002 wt% Si, 0.002 wt% P, 0.002 wt% S.

This metal composition was heated up to 1580°C, i.e. 515°C above the liquidus temperature, and was then gas atomized with argon in the following process conditions:
- Gas pressure: 16 bar
- Nozzle diameter: 3mm
- Gas to metal ratio: 1.79

The obtained metal powder was then dried at 100°C under vacuum for 0.5 to 1 day.

The powder was then sieved and classified into F1 to F3 fractions. Its flowability, sphericity and roundness were evaluated and found satisfying for additive manufacturing use.

The metal powder had the following characteristics:
XRD and Electron Beam Backscatter Diffraction (EBDS) analyses did not show any evidence of crystalline phases. At least 99 wt% of the microstructure was thus amorphous.

The mean form factor measured by Dynamic Image Analysis according to ISO 13322-2:2021, using a Camsizer^{®} equipment, was 0.71 for fraction F2.

The particle size distribution, measured by laser diffraction according to ISO13320:2020, presented the following characteristics: D10 = 15.7 µm, D50 = 72.1 µm and D90 = 247.2 µm.

Printing tests:
The fraction F2 of powders 1 and 2 was then used to print cubes of 1 cm³ by Laser Powder Bed Fusion, using a layer thickness of 20µm and a laser spot size of 55µm.

The cubes were then evaluated, and the corresponding results are gathered in below Table 1. The weight fraction of the amorphous phase was calculated by Rietveld refinement of powder X-Ray Diffraction (XRD) measurements with the TOPAS software from Bruker. All printed parts according to the invention had a microstructure comprising 80 to 90 wt% of an amorphous phase, the remainder being made of crystalline phases comprising austenite. No segregation nor hot cracking was observed.

**Table 1**

| Cube | Powder number | Power (W) | Speed (mm/s) | LED (J/m) | Hatch (µm) | VED (J/mm³) | Density | Vickers Hardness Hv₁ |
|---|---|---|---|---|---|---|---|---|
| 1* | 2 | 55 | 450 | 122 | 60 | 102 | 7.34 | 796 |
| 2* | 2 | 65 | 450 | 144 | 60 | 120 | 7.22 | 883 |
| 3* | 2 | 55 | 600 | 92 | 50 | 92 | 7.33 | 866 |
| 4* | 2 | 85 | 550 | 155 | 60 | 129 | 7.36 | 916 |
| 5* | 1 | 95 | 700 | 136 | 60 | 113 | 7.52 | 838 |
| 6* | 1 | 95 | 700 | 136 | 50 | 136 | 7.52 | 838 |
| 7* | 1 | 115 | 700 | 164 | 70 | 117 | 7.53 | 851 |

| | | | | | | | | |
|---|---|---|---|---|---|---|---|---|
| * according to the invention | | | | | | | | |

## Claims

1. Metal powder having a composition comprising the following elements, expressed in content by weight: $12 % \leq Mo \leq 18 %$ $3 % \leq P \leq 7 %$ $0.5 % \leq C \leq 3 %$ $0.5 % \leq B \leq 5 %$ $Si \leq 1 %$ the balance being Fe and unavoidable impurities resulting from the elaboration, the microstructure of the metal powder comprising at least 95 wt% of an amorphous phase, the remainder being made of crystalline phase(s).

2. Metal powder according to claim 1 wherein the Mo content is from 13 to 16.5 wt%.

3. Metal powder according to any one of claims 1 or 2 wherein the P content is from 6 to 7 wt%.

4. Metal powder according to any one of claims 1 to 3 wherein the B content is from 0.7 to 2 wt%.

5. Metal powder according to any one of claims 1 to 4 wherein the Si content is from 0.3 to 0.6 wt%.

6. Metal powder according to any one of claims 1 to 5 wherein the microstructure of the metal powder comprises at least 99 wt% of an amorphous phase.

7. Metal powder according to any one of claims 1 to 6 wherein the average particle size after sieving ranks from 1 to 150 µm.

8. Metal powder according to claim 7 wherein the average particle size after sieving ranks from 1 to 20 µm.

9. Metal powder according to claim 7 wherein the average particle size after sieving ranks from 20 to 63 µm.

10. Metal powder according to claim 7 wherein the average particle size after sieving ranks from 60 to 150 µm.

11. A process for manufacturing a metal powder for additive manufacturing, comprising:
- a) Melting elements and/or metal-alloys at a temperature at least 100°C above the liquidus temperature to obtain a molten composition comprising the following elements, expressed in content by weight: $12 % \leq Mo \leq 18 %$ $3 % \leq P \leq 7 %$ $0.5 % \leq C \leq 3 %$ $0.5 % \leq B \leq 5 %$ $Si \leq 1 %$ the balance being Fe and unavoidable impurities resulting from the elaboration,
- b) Atomizing the molten composition through a nozzle with a gas pressurized from 10 to 30 bar.

12. A process for manufacturing a printed part by additive manufacturing wherein a powder according to any one of claims 1 to 10 or obtained according to claim 11 is printed by Laser Powder Bed Fusion.

13. A process according to claim 12, comprising a first step of forming a powder layer with a thickness below 100 µm and a second step where a focused laser beam forms a shaped layer by melting at least part of the powder layer in an atmosphere substantially composed of an inert gas.

14. A process according to any one of claims 12 or 13 wherein:
- the laser power is limited to maximum 120 W,
- the scan speed is from 400 to 750 mm/s,
- the Linear Energy Density is from 80 to 200 J/m,
- the hatch spacing is from 40 to 100 µm,
- The Volumetric Energy Density is from 80 to 200 J/mm³.

15. A printed part obtained from a powder according to any one of claims 1 to 10 or obtained by the process according to any one of claims 12 to 14, wherein the microstructure of the printed part comprises at least 75 wt% of an amorphous phase, the remainder being made of crystalline phase(s).

## Patentansprüche

1. Metallpulver mit einer Zusammensetzung, die die folgenden Elemente umfasst, ausgedrückt in Gehalt nach Gewicht: $12 % \leq Mo \leq 18 %$ $3 % \leq P \leq 7 %$ $0 , 5 % \leq C \leq 3 %$ $0 , 5 % \leq B \leq 5 %$ $Si \leq 1 %$ wobei der Rest Fe und unvermeidbare Verunreinigungen sind, die aus der Herstellung resultieren, wobei die Mikrostruktur des Metallpulvers mindestens 95 Gew.-% einer amorphen Phase umfasst, wobei der Rest aus kristalliner Phase(n) gebildet ist.

2. Metallpulver gemäß Anspruch 1, wobei der Mo-Gehalt zwischen 13 und 16,5 Gew.-% liegt.

3. Metallpulver gemäß einer der Ansprüche 1 oder 2, wobei der P-Gehalt zwischen 6 und 7 Gew.-% liegt.

4. Metallpulver gemäß einer der Ansprüche 1 bis 3, wobei der B-Gehalt zwischen 0,7 und 2 Gew.-% liegt.

5. Metallpulver gemäß einer der Ansprüche 1 bis 4, wobei der Si-Gehalt zwischen 0,3 und 0,6 Gew.-% liegt.

6. Metallpulver gemäß einer der Ansprüche 1 bis 5, wobei die Mikrostruktur des Metallpulvers mindestens 99 Gew.-% einer amorphen Phase umfasst.

7. Metallpulver gemäß einer der Ansprüche 1 bis 6, wobei die mittlere Partikelgröße nach dem Sieben von 1 bis 150 µm reicht.

8. Metallpulver gemäß Anspruch 7, wobei die mittlere Partikelgröße nach dem Sieben von 1 bis 20 µm reicht.

9. Metallpulver gemäß Anspruch 7, wobei die mittlere Partikelgröße nach dem Sieben von 20 bis 63 µm reicht.

10. Metallpulver gemäß Anspruch 7, wobei die mittlere Partikelgröße nach dem Sieben von 60 bis 150 µm reicht.

11. Ein Verfahren zur Herstellung eines Metallpulvers für additive Fertigung, umfassend:
- a) Schmelzen von Elementen und/oder Metalllegierungen bei einer Temperatur, die mindestens 100°C oberhalb der Liquidustemperatur liegt, um eine geschmolzene Zusammensetzung zu erhalten, die die folgenden Elemente umfasst, ausgedrückt in Gehalt nach Gewicht: $12 % \leq Mo \leq 18 %$ $3 % \leq P \leq 7 %$ $0 , 5 % \leq C \leq 3 %$ $0 , 5 % \leq B \leq 5 %$ $Si \leq 1 %$ wobei der Rest Fe und unvermeidbare Verunreinigungen sind, die aus der Herstellung resultieren,
- b) Zerstäuben der geschmolzenen Zusammensetzung durch eine Düse mit einem Gas, das von 10 bis 30 bar druckbeaufschlagt ist.

12. Ein Verfahren zur Herstellung eines gedruckten Bauteils durch additive Fertigung, wobei ein Pulver gemäß einer der Ansprüche 1 bis 10 oder erhalten gemäß Anspruch 11 durch Laser-Pulverbettfusion gedruckt wird.

13. Ein Verfahren gemäß Anspruch 12, umfassend einen ersten Schritt des Bildens einer Pulverschicht mit einer Dicke unter 100 µm und einen zweiten Schritt, wobei ein fokussierter Laserstrahl eine geformte Schicht durch Schmelzen mindestens eines Teils der Pulverschicht in einer Atmosphäre bildet, die im Wesentlichen aus einem inerten Gas zusammengesetzt ist.

14. Ein Verfahren gemäß einer der Ansprüche 12 oder 13, wobei:
- die Laserleistung auf maximal 120 W begrenzt ist,
- die Scangeschwindigkeit zwischen 400 und 750 mm/s liegt,
- die lineare Energiedichte zwischen 80 und 200 J/m liegt,
- der Hatch-Abstand liegt zwischen 40 und 100 µm,
- Die volumetrische Energiedichte liegt zwischen 80 und 200 J/mm³.

15. Ein gedrucktes Bauteil, erhalten aus einem Pulver gemäß einem der Ansprüche 1 bis 10 oder erhalten durch das Verfahren gemäß einem der Ansprüche 12 bis 14, wobei die Mikrostruktur des gedruckten Bauteils mindestens 75 Gew.-% einer amorphen Phase umfasst, wobei der Rest aus kristalliner/kristallinen Phase(n) besteht.

## Revendications

1. Poudre métallique ayant une composition comprenant les éléments suivants, exprimés en teneur en poids : $12 % \leq Mo \leq 18 %$ $3 % \leq P \leq 7 %$ $0 , 5 % \leq C \leq 3 %$ $0 , 5 % \leq B \leq 5 %$ $Si \leq 1 %$ le solde étant Fe et des impuretés inévitables résultant de l'élaboration, la microstructure de la poudre métallique comprenant au moins 95 % en masse d'une phase amorphe, le reste étant constitué de phase(s) cristalline(s).

2. Poudre métallique selon la revendication 1, dans laquelle la teneur en Mo est comprise entre 13 et 16,5 % en masse.

3. Poudre métallique selon l'une quelconque des revendications 1 ou 2, dans laquelle la teneur en P est comprise entre 6 et 7 % en masse.

4. Poudre métallique selon l'une quelconque des revendications 1 à 3, dans laquelle la teneur en B est comprise entre 0,7 et 2 % en masse.

5. Poudre métallique selon l'une quelconque des revendications 1 à 4, dans laquelle la teneur en Si est comprise entre 0,3 et 0,6 % en masse.

6. Poudre métallique selon l'une quelconque des revendications 1 à 5, dans laquelle la microstructure de la poudre métallique comprend au moins 99 % en masse d'une phase amorphe.

7. Poudre métallique selon l'une quelconque des revendications 1 à 6, dans laquelle la taille moyenne des particules après classement par tamisage est comprise entre 1 et 150 µm.

8. Poudre métallique selon la revendication 7, dans laquelle la taille moyenne des particules après classement par tamisage est comprise entre 1 et 20 µm.

9. Poudre métallique selon la revendication 7, dans laquelle la taille moyenne des particules après classement par tamisage est comprise entre 20 et 63 µm.

10. Poudre métallique selon la revendication 7, dans laquelle la taille moyenne des particules après classement par tamisage est comprise entre 60 et 150 µm.

11. Un procédé de fabrication d'une poudre métallique pour fabrication additive, comprenant :
- a) Fusion d'éléments et/ou d'alliages métalliques à une température au moins 100 °C au-dessus de la température de liquidus pour obtenir une composition fondue comprenant les éléments suivants, exprimés en teneur en poids : $12 % \leq Mo \leq 18 %$ $3 % \leq P \leq 7 %$ $0 , 5 % \leq C \leq 3 %$ $0 , 5 % \leq B \leq 5 %$ $Si \leq 1 %$ le solde étant Fe et des impuretés inévitables résultant de l'élaboration,
- b) Atomisation de la composition fondue à travers une buse avec un gaz pressurisé de 10 à 30 bar.

12. Un procédé de fabrication d'une pièce imprimée par fabrication additive dans lequel une poudre selon l'une quelconque des revendications 1 à 10 ou obtenue selon la revendication 11 est imprimée par fusion laser sur lit de poudre.

13. Un procédé selon la revendication 12, comprenant une première étape de formation d'une couche de poudre avec une épaisseur inférieure à 100 µm et une deuxième étape où un faisceau laser focalisé forme une couche façonnée par fusion d'au moins une partie de la couche de poudre dans une atmosphère substantiellement composée d'un gaz inerte.

14. Un procédé selon l'une quelconque des revendications 12 ou 13, dans lequel :
- la puissance du laser est limitée à au maximum 120 W,
- la vitesse de balayage est comprise entre 400 et 750 mm/s,
- la densité d'énergie linéaire est comprise entre 80 et 200 J/m,
- l'espacement des hachures est compris entre 40 et 100 µm,
- La densité d'énergie volumétrique est comprise entre 80 et 200 J/mm³.

15. Une pièce imprimée obtenue à partir d'une poudre selon l'une quelconque des revendications 1 à 10 ou obtenue par le procédé selon l'une quelconque des revendications 12 à 14, dans laquelle la microstructure de la pièce imprimée comprend au moins 75 % en masse d'une phase amorphe, le reste étant constitué de phase(s) cristalline(s).
